# EUROPEAN PATENT APPLICATION

(11) **EP 4 794 217 A1**
(43) Date of publication of application: **19.08.2026**
(21) Application number: 23960893.8
(22) Date of filing: 05.12.2023
(51) Int. Cl.: H04B 7/06, H04N 21/4363, H04B 17/309, H01Q 3/02

(54) **METHOD FOR SETTING ANTENNA POINTING DIRECTION AND WIRELESS AV TRANSMISSION SYSTEM USING SAME**

(71) Applicant: LG Electronics Inc., Yeongdeungpo-gu Seoul 07336 (KR)
(72) Inventor: JI, Maengsob, Seoul 06772 (KR)
(74) Representative: Schott, Jakob Valentin
(86) International application number: PCT/KR2023/019882
(87) International publication number: WO 2025/121463

(57) **Abstract**

A method for setting an antenna pointing direction, according to an embodiment of the present disclosure, comprises the steps of: performing a beam scan between a first antenna of a first terminal and a second antenna of a second terminal; calculating signal quality and a beam direction of beam pairs generated by the beam scan; storing, as a candidate beam path, a beam pair having signal quality equal to or greater than a reference value among the calculated beam pairs; setting a direction of the first antenna so that a plurality of candidate beam paths are included in a beamforming area of the first antenna; and providing an antenna pointing direction setting guide corresponding to the set direction of the first antenna.

## Description

### TECHNICAL FIELD

The present disclosure relates to a wireless AV transmission system that provides a method of setting an antenna pointing direction.

### BACKGROUND

Recently, due to a rapid increase in network traffic caused by electronic devices, 5th generation mobile communication (5G) technology using signals in an ultra-high frequency band has been developed. For example, mmWave, in which a wavelength o a signal is in millimeters, may be used in 5th generation mobile communication.

To mitigate path loss and increase a transmission distance of radio waves in the mmWave band, beamforming, massive MIMO, full dimensional MIMO (FD-MIMO), array antenna, analog beamforming, and large-scale antenna technologies have been discussed in 5G communication systems.

For example, in 5G wireless communication systems, multi-antenna-based beamforming technology may be used to overcome high signal attenuation when transmitting and receiving signals in the mmWave frequency (above 6 GHz) band. Beamforming is a method that maximizes signal transmission and reception gain in a desired direction through phase adjustment for each antenna. To this end, according to various embodiments, an electronic device may use a beam book including a plurality of beams pre-designed to be oriented in different directions. The electronic device may dynamically select the most suitable beam among the plurality of beams constituting the beam book according to the current wireless channel conditions through a beam management operation during signal transmission and reception, and use the selected beam for beamforming.

In the related art, a beam path is set according to the arrangement conditions of the PCP/NPCP antenna of an electronic device, and beam tracking (vertical/horizontal) is possible through beamforming of the antenna itself. However, when a temporary fault occurs between the PCP/NPCP antennas and the signal quality of the avoidance beam deteriorates, there is no avoidance path, which leads to problems such as interruption of transmission and reception or image degradation.

### DISCLOSURE

### Technical Problem

An object of the present disclosure is to provide an antenna pointing direction setting method of setting an antenna direction to include a plurality of beam paths and a wireless AV transmission system using the method.

### Technical Solution

According to the present disclosure, a method of setting an antenna pointing direction of a wireless AV communication system includes performing a beam scan between a first antenna of a first user equipment (UE) and a second antenna of a second UE, calculating a signal quality and beam direction of beam pairs generated by the beam scan, storing, as a candidate beam path, a beam pair having a signal quality greater than or equal to a reference value among the calculated beam pairs, setting a direction of the first antenna such that a plurality of candidate beam paths are included within a beamforming area of the first antenna, and providing an antenna pointing direction setting guide in correspondence with the set direction of the first antenna.

In some embodiments, the performing of the beam scan between the first antenna and the second antenna may include setting at least one location of the first antenna based on an adjustment range of a panning direction and a tilting direction of the first antenna, and performing at least one beam scan according to the set location of the first antenna.

In some embodiments, the storing, as a candidate beam path, a beam pair having a signal quality greater than or equal to a reference value among the calculated beam pairs may include determining whether there is a beam path satisfying a preset signal quality among beam pairs stored for respective locations of the first antenna, and when there is a beam path satisfying the signal quality, storing the beam path.

In some embodiments, the setting a direction of the first antenna such that a plurality of candidate beam paths are included within a beamforming area of the first antenna may include setting an effective beam path by checking whether a direction of the plurality of candidate beam paths is separated by more than a preset value based on a beam book, calculating a panning direction and a tilting direction by considering a number of effective beam paths and the signal quality within a vertical and horizontal beam steering range of the first antenna, and setting the direction of the first antenna based on the calculated panning direction and tilting direction.

In some embodiments, the providing of the antenna pointing direction setting guide in correspondence with the set direction of the first antenna may include indicating clockwise and counterclockwise directions and an amount of rotation according to the calculated panning direction, indicating an up and down direction and the amount of rotation according to the calculated tilting direction, and indicating whether alignment is performed based on a change in an antenna direction.

### Advantageous Effects

The effects of a wireless AV transmission system according to the present disclosure are described as follows.

According to at least one of embodiments of the present disclosure, there is an advantage of avoiding failures in a usage environment and avoiding degradation of transmission and reception quality by considering a plurality of beam paths that is to be avoided when a failure occurs.

The effects that are achievable by the present disclosure are not limited to what has been particularly described hereinabove and other advantages not described herein will be more clearly understood by persons skilled in the art from the following description.

### BRIEF DESCRIPTION OF THE DRAWINGS

FIG. 1 is an overall block diagram of a wireless AV transmission system according to any one of embodiments of the present disclosure.
FIG. 2 is a diagram showing a first user equipment (UE) of a wireless AV transmission system according to any one of embodiments of the present disclosure.
FIG. 3 is a diagram showing a beam book of a wireless AV transmission system according to any one of embodiments of the present disclosure.
FIG. 4 is a diagram illustrating a communication situation along a single path of a wireless AV transmission system according to any one of the embodiments of the present disclosure.
FIG. 5 is a diagram illustrating an antenna pointing direction setting operation according to any one of the embodiments of the present disclosure.
FIG. 6 is a diagram illustrating a communication situation along a plurality of paths of a wireless AV transmission system according to any one of the embodiments of the present disclosure.
FIG. 7 is a diagram illustrating an example of providing an antenna pointing direction setting guide according to an embodiment of the present disclosure.
FIG. 8 is a flowchart illustrating an antenna pointing direction setting method according to an embodiment of the present disclosure.

### DETAILED DESCRIPTION

Hereinafter, the present disclosure will be described in detail by explaining embodiments of the present disclosure with reference to the attached drawings. The same reference numerals in the drawings denote like elements, and a repeated explanation thereof will not be given. The suffixes "module" and "unit" of elements herein are used for convenience of description and thus can be used interchangeably and do not have any distinguishable meanings or functions. In the following description of the embodiment of the present disclosure, a detailed description of known functions and configurations incorporated herein will be omitted for the purpose of clarity and for brevity. The features of the present disclosure will be more clearly understood from the accompanying drawings and should not be limited by the accompanying drawings, and it is to be appreciated that all changes, equivalents, and substitutes that do not depart from the spirit and technical scope of the present disclosure are encompassed in the present disclosure.

The following embodiments of the present disclosure are intended only to embody the present disclosure and do not limit or restrict the scope of the rights of the present disclosure. Easy inference by those of skill in the art from the detailed description and embodiments of the present disclosure is to be interpreted as falling within the scope of the present disclosure.

The detailed description should not be interpreted restrictively in all respects and should be considered exemplary. The scope of the present disclosure should be determined by a reasonable interpretation of the appended claims, and all modifications within the equivalent scope of the present disclosure are included within the scope of the present disclosure.

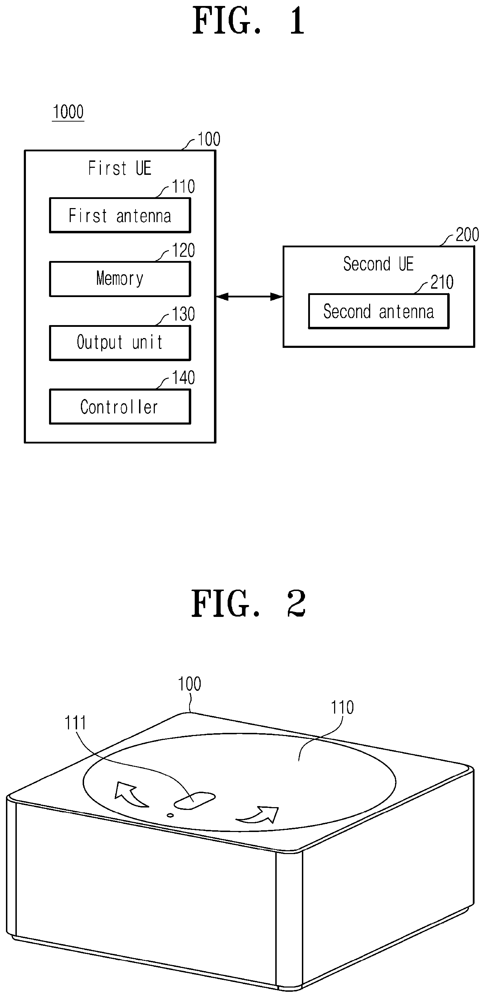

FIG. 1 is an overall block diagram of a wireless AV transmission system according to any one of embodiments of the present disclosure. FIG. 2 is a diagram showing a first user equipment (UE) of a wireless AV transmission system according to any one of embodiments of the present disclosure.

Referring to FIGS. 1 and 2, a wireless AV transmission system 1000 according to an embodiment of the present disclosure may include a first UE 100 and a second UE 200.

The first UE 100 may include a first antenna 110, a memory 120, an output unit 130, and a controller 140.

The first UE 100 and the second UE 200 may adopt phased array antennas (PCP, NPCP) using a millimeter wave (mmWave) band. The first UE 110 may generate a beam path for communication through a beam pair with a second antenna 210 of the second UE 200. In this case, the first antenna 110 may be a PCP antenna, which is a phased array antenna, and the second antenna 210 may be an NPCP antenna. The first antenna 110 may include a transceiver 111 configured to transmit and receive a signal.

The first antenna 110 may perform beam tracking in vertical and horizontal directions through beamforming of the antenna itself. That is, the first antenna may generate a beam path for communication within a beam coverage area by beamforming. More specific embodiments related thereto will be described in more detail below with reference to FIG. 2.

The first antenna 110 may change the antenna pointing direction in response to panning and tilting adjustments.

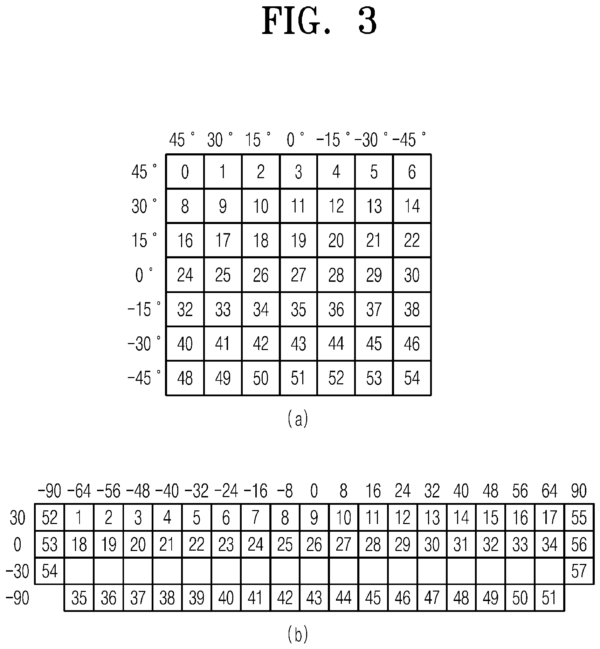

The memory 120 may store a beam book that stores an angle between beams set according to the intensity and phase of an antenna feed signal. In this case, the beam book may include a beam book of the first UE and a beam book of the second UE. More specific embodiments related thereto will be described in more detail below with reference to FIG. 3.

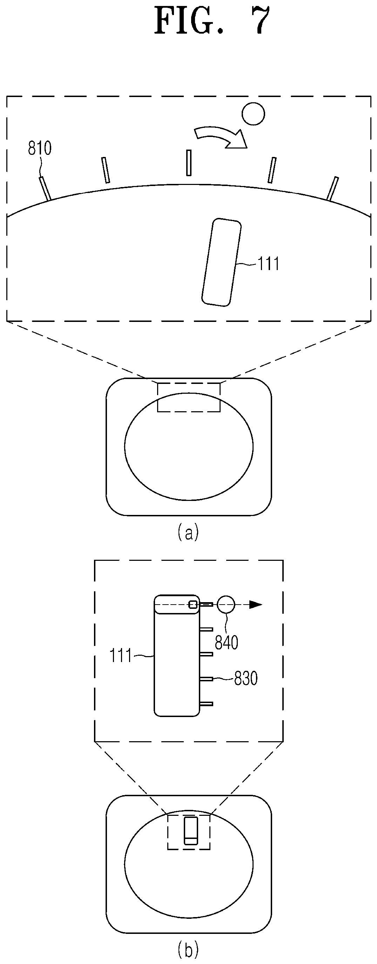

The output unit 130 may guide a user to adjust the panning and tilting of the first antenna 110 of the first UE 100 by using at least one of screen, voice, and video. More specific embodiments related thereto will be described in more detail below with reference to FIG. 7.

The output unit 130 may guide a user to adjust the panning and tilting of the second antenna 210 of the second UE 200 by using at least one of screen, voice, and video.

The controller 140 may obtain the signal quality and beam direction of beam pairs according to the first antenna 110 and the second antenna 210. In this case, signal quality may include at least one of T-put, signal to noise ratio (SNR), and received signal strength indicator (RSSI).

The controller 140 may check whether at least one beam pair having optimal characteristics (compression rate/transmission rate) among the beam pairs of the first antenna 110 and the second antenna 210 is separated by a block or more determined by a beam book and whether the signal quality is equal to or greater than a reference value. The controller 140 may store the checked beam pair information in the memory 120.

The controller 140 may repeat signal quality checks at at least one location corresponding to a coverage area of the first antenna 110.

After checking the signal quality for each location, the controller 140 may set the antenna pointing direction of the first antenna 110.

The controller 140 may output an antenna pointing direction setting guide through the output unit 130 after setting the antenna pointing direction.

Then, the antenna pointing direction setting will be described in detail in this specification.

First, according to an embodiment of the present disclosure, manual setting of an antenna direction will be described. This is obtained in a relationship between the first UE 100 and the second UE 200.

For example, the first UE 100 may guide the panning direction and tilting direction of the first antenna 110 to at least one of screen, voice, and video on the screen. In this case, the user may set the antenna direction according to the guide.

Then, the first UE 100 may calculate the ID and signal quality of a main candidate beam among the beam pairs generated through beam scanning of the first antenna 110 and the second antenna 210 in the set antenna direction. In this case, the beam ID indicates the beam direction set based on the beam book.

The first UE 100 may store the beam direction and signal quality for an effective beam having signal quality greater than or equal to a reference value.

When the first UE 100 completes storing the beam direction and signal quality according to the antenna direction, the first UE 100 may repeat storing the beam direction and the signal quality by changing the panning direction and tilting direction of the first antenna 110.

When the first UE 100 completes checking the beam direction and signal quality for the entire or partial panning direction and tilting direction of the first antenna 110, the first UE 100 may calculate the optimal panning direction and tilting direction by considering the number of effective beams and signal quality in a beam steering range of the first antenna 110 in the vertical and horizontal directions and provide the user with an antenna pointing direction setting guide. In this case, the first UE 100 may set the panning direction and tilting direction differently for each seciton depending on the beam steering range.

The first UE 100 may check an effective beam level (signal quality, or distance between beam IDs) when setting antenna points based on the antenna pointing direction setting guide and complete the setting.

Then, the first UE 100 may set the optimal beam direction by fine-tuning as needed.

Second, according to an embodiment of the present disclosure, automatic setting of an antenna point will be described. This is obtained in a relationship between the first UE 100 and the second UE 200.

The first UE 100 may calculate the ID and signal quality of the main candidate beam during beam pairing of the first antenna 110 and the second antenna 210 at a preset initial location. In this case, the beam ID indicates the beam direction set based on the beam book.

The first UE 100 may store the beam direction and signal quality for an effective beam having signal quality greater than or equal to a reference value.

When the first UE completes storing the beam direction and signal quality according to the antenna direction, the first UE may repeat storing the beam direction and the signal quality by changing the panning direction and tilting direction of the antenna.

When the first UE 100 completes checking the beam direction and signal quality for the entire or partial panning direction and tilting direction of the antenna, the first UE 100 may calculate the panning direction and tilting direction by considering the number of effective beams and signal quality in the vertical and horizontal beam control range of the antenna and provide the user with an antenna pointing direction setting guide. In this case, the first UE 100 may set the panning direction and tilting direction differently for each section depending on the beam steering range.

The first UE 100 may check an effective beam level (signal quality, or distance between beam IDs) when setting the antenna point in the guided direction and complete the setting.

Then, the first UE 100 may set the optimal beam direction by fine-tuning as needed.

FIG. 3 is a diagram showing a beam book of a wireless AV transmission system according to any one of embodiments of the present disclosure.

As shown in FIG. 3, the beam book may include an angle between beams by using the intensity and phase of the antenna feed signal. The beam book may include candidate beam IDs based on panning values and tilting values according to the antenna direction.

As illustrated in (a) of FIG. 3, the beam book of the first antenna 110 may cover a total area of 90 degrees from -45 degrees to +45 degrees corresponding to the coverage area according to the panning direction of the first UE 100. In this case, the antenna panning direction may be set to -45, -30, -15, 0, 15, 30, and 45 degrees.

Corresponding to the coverage area according to the tilting direction of the first UE 100, a total area of 90 degrees from -45 degrees to +45 degrees may be covered. In this case, the antenna tilting direction may be set to -45, -30, -15, 0, 15, 30, and 45 degrees.

The beam book of the first antenna 110 may be set to an ID from 0 to 54 by combining the panning direction and the tilting direction.

As shown in (b) of FIG. 3, the beam book of the second antenna 210 may cover a total area of 180 degrees from -90 degrees to +90 degrees, corresponding to the coverage area according to the panning direction of the second UE 200. In this case, the antenna panning direction may be set to -90, -64, -56, -48, -40, -32, -24, 16, 8, 0, +8, +16, +24, +32, +40, +48, +56, +64, and +90 degrees.

Corresponding to the coverage area according to the tilting direction of the second UE 200, a total area of 120 degrees from -90 degrees to +30 degrees may be covered. In this case, the antenna tilting direction may be set to -90, -30, 0, and +30 degrees.

The beam book of the second antenna 210 may be set to an ID from 0 to 57 corresponding to a combination of panning direction and tilting direction.

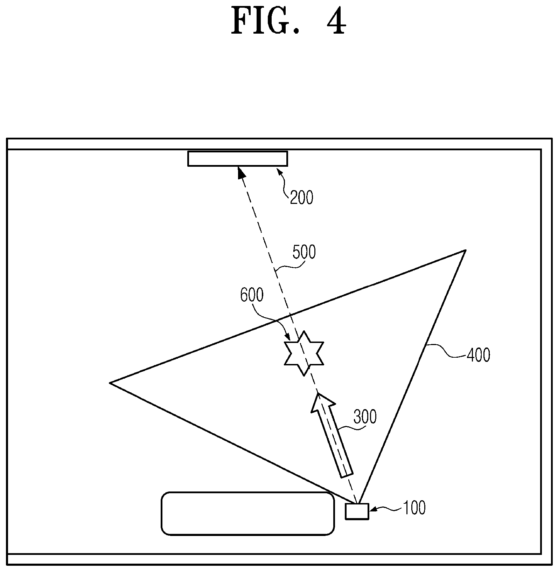

FIG. 4 is a diagram illustrating a communication situation along a single path of a wireless AV transmission system according to any one of the embodiments of the present disclosure.

Referring to FIG. 4, the wireless AV transmission system may have a main path 500 set by an antenna pointing direction 300 and a beamforming area 400 set according to a beam pair between the first UE 100 and the second UE 200.

In some embodiments, the main path may establish communication by having beam #27 of the first UE 100 and beam #28 of the second UE 200 be beam paired based on a beam book. In this case, the antenna pointing direction of the antenna of the first UE 100 has a panning value of 0 degrees and a tilting value of 0 degrees, and the panning value of the antenna of the second UE 200 is 16 degrees, and the tilting value is 0 degrees.

However, when an obstacle 600 is placed on the main path 500, there is no avoidance path other than the main path 500 within the beamforming area according to the antenna pointing direction 300, and thus a problem may occur in which the signal quality deteriorates when a communication failure occurs.

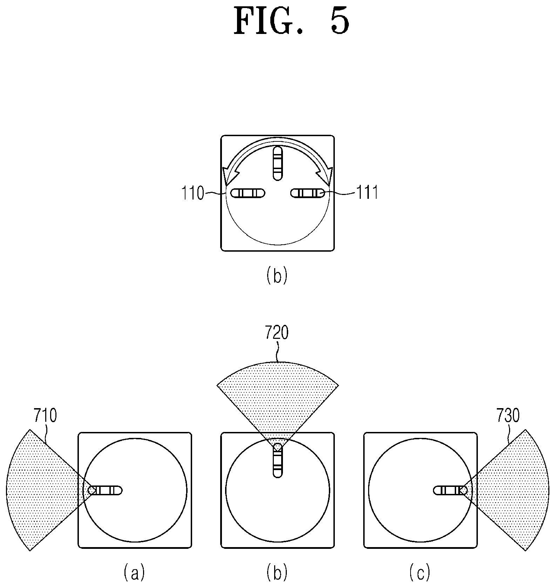

FIG. 5 is a diagram illustrating an antenna pointing direction setting operation according to any one of the embodiments of the present disclosure.

Referring to (a) of FIG. 5, the first UE 100 may have a panning direction set within -90 to +90 degrees.

Referring to (b) of FIG. 5, when the first antenna 110 is located at -90 degrees counterclockwise, the first UE 100 may check an effective beam between the first antenna 110 and the second antenna 210 within a beamforming area according to the coverage area.

Referring to (c) of FIG. 5, when the antenna of the first UE 100 is located in a front direction (0 degrees), an effective beam between the first antenna 110 and the second antenna 210 may be checked within the beamforming area according to the coverage area.

Referring to (d) of FIG. 5, when the antenna of the first UE 100 is located at +90 counterclockwise, an effective beam between the first antenna 110 and the second antenna 210 may be checked within the beamforming area according to the coverage area.

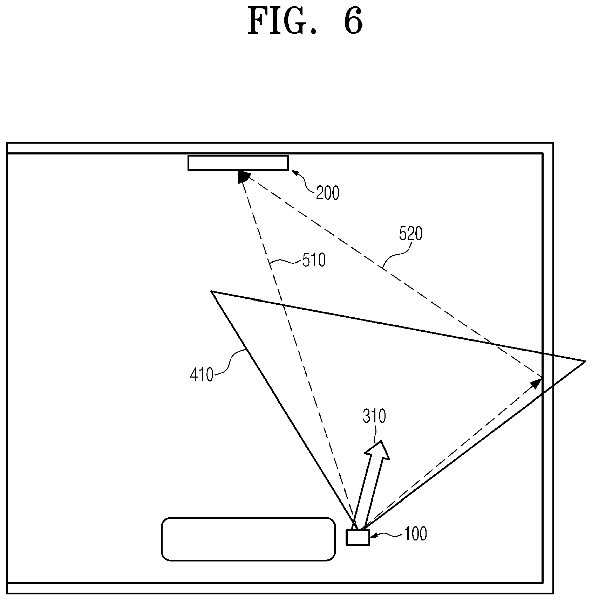

FIG. 6 is a diagram illustrating a communication situation along a plurality of paths of a wireless AV transmission system according to any one of the embodiments of the present disclosure.

Referring to FIG. 6, the wireless AV communication system may perform a beam scan between the first antenna 110 of the first UE 100 and the second antenna 210 of the second UE 200.

In this case, the first UE 100 may calculate the signal quality and beam direction of the beam pairs generated by the beam scan. To this end, the first UE 100 may set at least one location of the first antenna based on an adjustment range of the panning direction and tilting direction of the first antenna, and may perform at least one beam scan according to the set location of the first antenna. Through this, the first UE 100 may change the location of the first antenna 110 and search for an effective signal.

The first UE 100 may store, as a candidate beam path, beam pairs having a signal quality greater than or equal to a reference value among the calculated beam pairs. To this end, the first UE 100 may determine whether there is a beam path among the beam pairs stored according to the location of the first antenna, which satisfies a preset signal quality, and may store the beam path that satisfies the signal quality.

For example, the first UE 100 may search for an effective signal at a antenna location of -90 degrees and check that there is no effective beam that satisfies the signal quality. The first UE 100 may search for an effective signal at an antenna location of 0 degrees and check that there is one first effective path 510 at -15 degrees. The first UE 100 may search for an effective signal at an antenna location of 90 degrees and check that there is one second effective path 520 at -30 degrees.

The first UE 100 may set a direction of the first antenna such that a plurality of candidate beam paths are included within the beamforming area of the first antenna. In this case, the first UE 100 may set an effective beam path by checking whether the direction of the plurality of candidate beam paths is separated by more than a preset value based on the beam book. Then, the first UE 100 may calculate the panning direction and tilting direction by considering the number of effective beam paths and signal quality in vertical and horizontal beam steering range of the first antenna, and set the direction of the first antenna based on the calculated panning direction and tilting direction.

Accordingly, the first UE 100 may set the optimal antenna direction based on the result of searching for an effective signal. That is, the wireless AV transmission system may set an antenna pointing direction 310 such that the first effective path 510 and the second effective path 520 are located in a beamforming area 410.

For example, the first UE 100 may set an antenna direction 300 to a 15-degree clockwise from the front.

For example, the first effective path 510 may establish communication by having beam #25 of the first UE 100 and beam #28 of the second UE 200 be beam paired based on a beam book. In this case, the antenna pointing direction of the antenna of the first UE 100 has a panning value of 0 degrees and a tilting value of 0 degrees, and the panning value of the antenna of the second UE 200 is 16 degrees, and the tilting value is 0 degrees.

For example, the second effective path 520 may establish communication by having beam #25 of the first UE 100 and beam #28 of the second UE 200 be beam paired based on a beam book. In this case, the antenna pointing direction of the antenna of the first UE 100 has a panning value of -45 degrees and a tilting value of 0 degrees, and the panning value of the antenna of the second UE 200 is 33 degrees, and the tilting value is 0 degrees.

FIG. 7 is a diagram illustrating an example of providing an antenna pointing direction setting guide according to an embodiment of the present disclosure.

Referring to FIG. 7, the first UE 100 may display and provide the antenna pointing direction setting guide in correspondence with a set direction of a first antenna.

The first UE 100 may provide a panning adjustment guide 810 indicating clockwise and counterclockwise directions and the amount of rotation. The first UE 100 may include a panning indicator 820 that indicates whether alignment is performed according to a change in antenna direction when a first antenna 111 moves according to the calculated panning direction.

The first UE 100 may provide a tilting adjustment guide 830 that indicates the up and down direction and the amount of rotation according to the tilting direction. The first UE 100 may include a tilting indicator 840 that indicates whether alignment is performed according to a change in antenna direction when a first antenna 111 moves according to the calculated tilting direction.

When setting of the antenna pointing direction of the first UE 100 is completed, the color of the panning indicator 820 and the tilting indicator 840 may be changed to provide a notification to a user.

The first UE 100 may provide an antenna pointing direction setting guide in voice.

For example, the first UE 100 may output a voice "For optimal signal quality, rotate the transceiver two spaces clockwise and adjust the transceiver one space upward!".

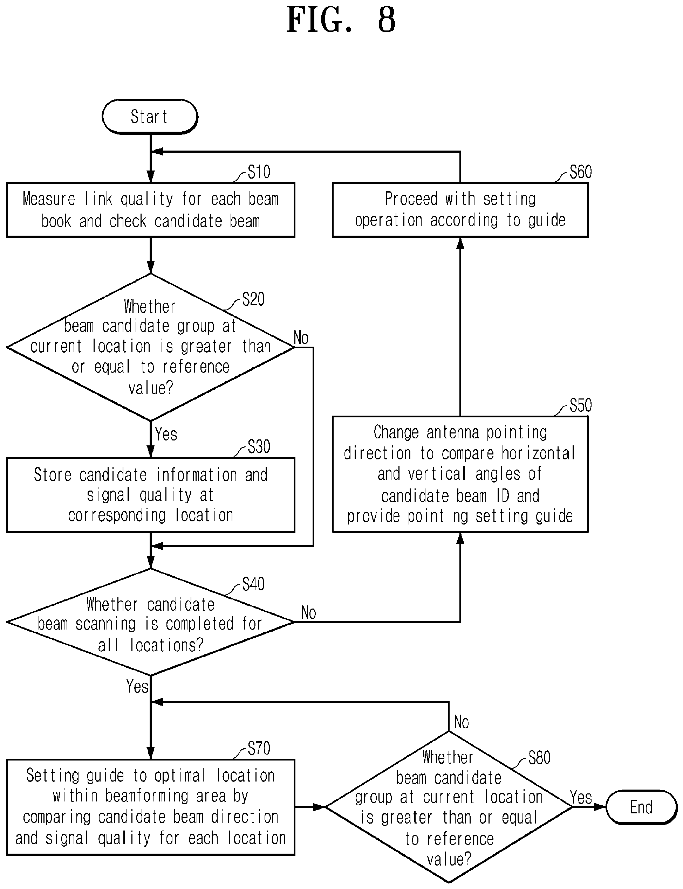

FIG. 8 is a flowchart illustrating an antenna pointing direction setting method according to an embodiment of the present disclosure.

Referring to FIG. 8, the link quality of the first UE 100 and the second UE 200 may be measured and a beam candidate group may be identified (S10).

After operation S10, the first UE 100 may determine whether the beam candidate group at the current location of the first antenna 110 is greater than or equal to a reference value (S20).

After operation S20, the first UE 100 may store beam candidate group information and signal quality at the current location (S30).

After operation S30, the first UE 100 may determine whether candidate beam scanning has been completed for all locations in which the first antenna 110 is moveable (S40).

After operation S40, when the candidate beam scanning is not completed, the first UE 100 may change the antenna direction up, down, left, and right to compare the horizontal and vertical directions of the candidate beam ID and provide an antenna pointing direction setting guide (S50).

After operation S50, the first UE 100 may proceed with a setting operation according to a guide (S60).

After operation S40, when candidate beam scanning is completed, the first UE 100 may provide an antenna direction setting guide to the optimal location within the beamforming area by comparing the candidate beam direction and signal quality for each location (S70).

The first UE 100 may check whether the beam candidate group at the current location is equal to or greater than the reference value (S80). When the beam candidate group at the current location is greater than or equal to the reference value, the antenna pointing direction setting method may be terminated.

Embodiments have been described from the method and/or device perspective, and descriptions of methods and devices may be applied so as to complement each other.

Although the accompanying drawings have been described separately for simplicity, it is possible to design new embodiments by merging the embodiments illustrated in the respective drawings. Designing a recording medium readable by a computer on which programs for executing the above-described embodiments are recorded as needed by those skilled in the art also falls within the scope of the appended claims and their equivalents. The devices and methods according to embodiments may not be limited by the configurations and methods of the embodiments described above. Various modifications can be made to the embodiments by selectively combining all or some of the embodiments. Although example embodiments have been described with reference to the drawings, those skilled in the art will appreciate that various modifications and variations may be made in the embodiments without departing from the spirit or scope of the disclosure described in the appended claims. Such modifications are not to be understood individually from the technical idea or perspective of the embodiments.

Various elements of the devices of the embodiments may be implemented by hardware, software, firmware, or a combination thereof. Various elements in the embodiments may be implemented by a single chip, for example, a single hardware circuit. According to embodiments, the components according to the embodiments may be implemented as separate chips, respectively. According to embodiments, at least one or more of the components of the device according to the embodiments may include one or more processors capable of executing one or more programs. The one or more programs may perform any one or more of the operations/methods according to the embodiments or include instructions for performing the same. Executable instructions for performing the method/operations of the device according to the embodiments may be stored in a non-transitory CRM or other computer program products configured to be executed by one or more processors, or may be stored in a transitory CRM or other computer program products configured to be executed by one or more processors. The memory according to the embodiments may be used as a concept covering not only volatile memories (e.g., RAM) but also nonvolatile memories, flash memories, and PROMs. It may also be implemented in the form of a carrier wave, such as transmission over the Internet. The processor-readable recording medium may be distributed to computer systems connected over a network such that the processor-readable code may be stored and executed in a distributed fashion.

In this specification, the term "/" and "," should be interpreted as indicating "and/or." For instance, the expression "A/B" may mean "A and/or B." Further, "A, B" may mean "A and/or B." Further, "A/B/C" may mean "at least one of A, B, and/or C." "A/B/C" may mean "at least one of A, B, and/or C." in this specification, the term "or" should be interpreted as indicating "and/or." For instance, the expression "A or B" may mean 1) only A, 2) only B, or 3) both A and B. In other words, the term "or" used in this document should be interpreted as indicating "additionally or alternatively."

Terms such as first and second may be used to describe various elements of the embodiments. However, various components according to the embodiments should not be limited by the above terms. These terms are only used to distinguish one element from another. For example, a first user input signal may be referred to as a second user input signal. Similarly, the second user input signal may be referred to as a first user input signal. Use of these terms should be construed as not departing from the scope of the various embodiments. The first user input signal and the second user input signal are both user input signals, but do not mean the same user input signals unless context clearly dictates otherwise.

The terms used to describe the embodiments are used for the purpose of describing specific embodiments, and are not intended to limit the embodiments. As used in the description of the embodiments and in the claims, the singular forms include plural referents unless the context clearly dictates otherwise. The expression "and/or" is used to include all possible combinations of terms. The terms such as "includes" or "has" are intended to indicate existence of figures, numbers, steps, elements, and/or components and should be understood as not precluding possibility of existence of additional existence of figures, numbers, steps, elements, and/or components. As used herein, conditional expressions such as "if" and "when" are not limited to an optional case and are intended to be interpreted. When a specific condition is satisfied, to perform the related operation or interpret the related definition according to the specific condition.

Operations according to the embodiments described in this specification may be performed by a transmission/reception device including a memory and/or a processor according to embodiments. The memory may store programs for processing/controlling the operations according to the embodiments, and the processor may control various operations described in this specification. The processor may be referred to as a controller or the like. In embodiments, operations may be performed by firmware, software, and/or a combination thereof. The firmware, software, and/or a combination thereof may be stored in the processor or the memory.

The operations according to the above-described embodiments may be performed by the transmission device and/or the reception device according to the embodiments. The transmission/reception device includes a transmitter/receiver configured to transmit and receive media data, a memory configured to store instructions (program code, algorithms, flowcharts and/or data) for a process according to embodiments, and a processor configured to control operations of the transmission/reception device.

The processor may be referred to as a controller or the like, and may correspond to, for example, hardware, software, and/or a combination thereof. The operations according to the above-described embodiments may be performed by the processor. The operations according to the above-described embodiments may be performed by the processor. The processor may be implemented as an encoder/decoder for the operations of the above-described embodiments.

### Mode for the Invention

Various embodiments for implementing the present disclosure have been described in detail in the previous table of contents.

### Industrial Applicability

The present disclosure is applicable to technology related to wireless AV transmission systems, and thus the industrial applicability is recognized.

## Claims

1. A method of setting an antenna pointing direction of a wireless AV communication system, the method comprising:
performing a beam scan between a first antenna of a first user equipment (UE) and a second antenna of a second UE;
calculating a signal quality and beam direction of beam pairs generated by the beam scan;
storing, as a candidate beam path, a beam pair having a signal quality greater than or equal to a reference value among the calculated beam pairs;
setting a direction of the first antenna such that a plurality of candidate beam paths are included within a beamforming area of the first antenna; and
providing an antenna pointing direction setting guide in correspondence with the set direction of the first antenna.

2. The method of claim 1, wherein the performing of the beam scan between the first antenna and the second antenna includes:
setting at least one location of the first antenna based on an adjustment range of a panning direction and a tilting direction of the first antenna; and
performing at least one beam scan according to the set location of the first antenna.

3. The method of claim 2, wherein the storing, as a candidate beam path, a beam pair having a signal quality greater than or equal to a reference value among the calculated beam pairs includes:
determining whether there is a beam path satisfying a preset signal quality among beam pairs stored for respective locations of the first antenna; and
when there is a beam path satisfying the signal quality, storing the beam path.

4. The method of claim 1, wherein the setting a direction of the first antenna such that a plurality of candidate beam paths are included within a beamforming area of the first antenna includes:
setting an effective beam path by checking whether a direction of the plurality of candidate beam paths is separated by more than a preset value based on a beam book;
calculating a panning direction and a tilting direction by considering a number of effective beam paths and the signal quality within a vertical and horizontal beam steering range of the first antenna; and
setting the direction of the first antenna based on the calculated panning direction and tilting direction.

5. The method of claim 4, wherein the providing of the antenna pointing direction setting guide in correspondence with the set direction of the first antenna includes:
indicating clockwise and counterclockwise directions and an amount of rotation according to the calculated panning direction;
indicating an up and down direction and the amount of rotation according to the calculated tilting direction; and
indicating whether alignment is performed based on a change in an antenna direction.

6. A wireless AV communication system comprising:
a first user equipment (UE) including a first antenna; and
a second UE including a second antenna,
wherein the first UE is configured to perform a beam scan between the first antenna and the second antenna, calculate a signal quality and beam direction of beam pairs generated by the beam scan, store, as a candidate beam path, a beam pair having a signal quality greater than or equal to a reference value among the calculated beam pairs, set a direction of the first antenna such that a plurality of candidate beam paths are included within a beamforming area of the first antenna, and provide the antenna pointing direction setting guide in correspondence with the set direction of the first antenna.

7. The wireless AV communication system of claim 6, wherein the first UE is configured to set at least one location of the first antenna based on an adjustment range of a panning direction and a tilting direction of the first antenna, and perform at least one beam scan according to the set location of the first antenna.

8. The wireless AV communication system of claim 7, wherein the first UE is configured to determine whether there is a beam path satisfying a preset signal quality among beam pairs stored for respective locations of the first antenna, and when there is a beam path satisfying the signal quality, store the beam path.

9. The wireless AV communication system of claim 6, wherein the first UE is configured to set an effective beam path by checking whether a direction of the plurality of candidate beam paths is separated by more than a preset value based on a beam book, calculate a panning direction and a tilting direction by considering a number of effective beam paths and the signal quality within a vertical and horizontal beam steering range of the first antenna, and set the direction of the first antenna based on the calculated panning direction and tilting direction.

10. The wireless AV communication system of claim 9, wherein the first UE is configured to indicate clockwise and counterclockwise directions and an amount of rotation according to the calculated panning direction, indicate an up and down direction and the amount of rotation according to the calculated tilting direction, and indicate whether alignment is performed based on a change in an antenna direction.
